(19) Europäisches Patentamt / European Patent Office / Office européen des brevets

(11) **EP 4 283 981 A1**

(12) **EUROPEAN PATENT APPLICATION**
published in accordance with Art. 153(4) EPC

(43) Date of publication:
**29.11.2023 Bulletin 2023/48**

(51) International Patent Classification (IPC):
*H04N 5/374* (2011.01)    *G01S 7/4861* (2020.01)
*G01S 17/10* (2020.01)    *G01S 17/894* (2020.01)

(21) Application number: **22742679.8**

(52) Cooperative Patent Classification (CPC):
**G01S 7/483; G01S 7/4861; G01S 17/10;
G01S 17/894; H04N 25/76**

(22) Date of filing: **21.01.2022**

(86) International application number:
**PCT/JP2022/002154**

(87) International publication number:
**WO 2022/158560 (28.07.2022 Gazette 2022/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.01.2021   JP 2021008797**

(71) Applicant: **TOPPAN INC.**
**Tokyo 110-0016 (JP)**

(72) Inventors:
• **OOKUBO Yu**
**Tokyo 110-0016 (JP)**
• **TAKAHASHI Satoshi**
**Tokyo 110-0016 (JP)**

(74) Representative: **Plasseraud IP**
**66, rue de la Chaussée d'Antin**
**75440 Paris Cedex 09 (FR)**

(54) **DISTANCE IMAGE CAPTURING DEVICE AND DISTANCE IMAGE CAPTURING METHOD**

(57) The range imaging device includes: a light-receiving unit including at least one pixel circuit, and a pixel drive circuit that causes the transfer transistors to distribute charge to the charge storage units, the at least one pixel circuit including a photoelectric conversion element that generates charge in response to incident light, N (N≥3) charge storage units that integrates charge in a frame cycle, and transfer transistors that transfer charge to the charge storage units from the photoelectric conversion element; a light source unit that emits light pulses; a range image processing unit that calculates a measurement distance to an object based on the integrated charge in the charge storage units; and a measurement control unit that calculates an integration time with which charge is integrated in the charge storage units, according to the integrated charge, the distance, and intensity of the incident light. The measurement control unit decrements the integration time by a first unit until the integrated charge becomes equal to or smaller than a first threshold.

FIG.1

EP 4 283 981 A1

**Description**

[Technical Field]

The present invention relates to range imaging devices and range imaging methods.
The present application claims the benefit of priority from Japanese Patent Application No. 2021-008797 filed January 22, 2021, the content of which is incorporated herein by reference.

[Background Art]

Time of flight (hereinafter referred to as TOF) type range imaging devices are known which measure the distance to an object based on the time of flight of light, using the known speed of light (e.g., see PTL 1).
Such a TOF type range imaging device includes a light source unit that emits light, and a pixel array in which a plurality of pixel circuits that detect light for measuring a distance are arranged in a two-dimensional matrix (in an array). The pixel circuits each include a photoelectric conversion element (e.g., photodiode) as a component which generates electrical charge corresponding to the intensity of light.
With this configuration, the TOF type range imaging device can acquire information on the distance between itself and the object or can capture an image of the object in a measurement space (three-dimensional space).
The TOF type range imaging device measures a distance based on delay time between the timing of emitting light and the timing of receiving light reflected by the object.
However, the electrical charge generated by the light sensor changes depending on the intensity of incident light, and thus as the distance to the object increases, the intensity of reflected light decreases (light intensity is inversely proportional to the square of the distance.).
Since the TOF type range imaging device obtains the delay time based on the electrical charge integrated in charge storage units, the measurement accuracy improves as the signal-to-noise (SN) ratio increases.
Therefore, the exposure time is changed according to the distance to the object from the TOF type range imaging device (hereinafter simply referred to as range imaging device) (auto exposure) (e.g., see PTL 2). Herein, the exposure time refers to the time required for integrating the electrical charge generated by the photoelectric conversion element in the charge storage units according to the intensity of incident light.
Thus, the electrical charge exposure time is increased as the distance to the object increases so that the electrical charge integrated in the charge storage units of the TOF sensor is increased, thereby maintaining distance measurement accuracy.

[Citation List]

[Patent Literature]

[PTL 1] JP 2004-294420 A
[PTL 2] JP 2012-185171 A

[Summary of the Invention]

[Technical Problem]

However, since light intensity is inversely proportional to the distance to the object, if exposure time is set in advance to match a distant object while there are objects having different reflectances, the charge storage units may become saturated with electrical charge generated due to the reflected light from an object having high reflectance.
In addition, if exposure time is set to match a distant object in order to improve accuracy in measurement distance while there are objects whose distances from the range imaging device are unknown, if an object is present at a short distance, the charge storage units may become saturated with electrical charge generated due to the reflected light from this short-distance object due to the intensity of the reflected light from this object being high.
The present invention has been made in light of the circumstances set forth above and aims to provide a range imaging device and a range imaging method which can determine an integration time for integrating electrical charge required for performing distance measurement with predetermined accuracy, without saturating the charge storage units even when the reflectances of the objects in a measurement space or the distances to the objects from the range imaging device are unknown.

[Solution to Problem]

In order to solve the issues described above, the range imaging device according to the present invention includes a light-receiving unit including: at least one pixel circuit including a photoelectric conversion element that generates charge according to incident light incident from a measurement space that is a space targeted to measurement, N (N≥3) charge storage units that integrate the charge in a frame cycle, and transfer transistors that transfer the charge to the charge storage units from the photoelectric conversion element, and a pixel drive circuit that turns on or off the transfer transistors for the charge storage units at predetermined integration timing synchronizing with emission of light pulses to distribute and integrate the charge; a light source unit that emits the light pulses to the measurement space; a range image processing unit that calculates a distance to an object that is present in the measurement space as a measurement distance, based on charge integrated in each of the charge storage units; and a measurement control unit that calculates an integration time that is the number of times of integrating the charge in the charge storage units, according to integrated charge in the charge storage units, the distance, and intensity of the incident light, wherein when the integrated charge exceeds a preset first threshold, the measurement control unit sequentially decrements the integration time by a predetermined first unit until the charge becomes equal to or smaller than the first threshold.

In the range imaging device according to the present invention, after the integrated charge becomes equal to or smaller than the first threshold, the measurement control unit may select a pixel circuit including the charge storage units having greatest integrated charge, and may calculate the integration time corresponding to the distance and the light intensity of the greatest integrated charge of the pixel circuit.

In the range imaging device according to the present invention, the device may further include an integration time table in which combinations of the distance and the light intensity are correlated with the integration time; the light intensity may be charge in one integration obtained by dividing the integrated charge by the integration time; and the measurement control unit may select and read the integration time corresponding to the distance and the light intensity of the greatest integrated charge of the pixel circuit, from the integration time table.

In the range imaging device according to the present invention, when the light intensity used when reading the integration time is equal to or greater than a preset second threshold, the measurement control unit may decrement the integration time read from the integration time table by a predetermined second unit.

In the range imaging device according to the present invention, the first threshold may be set to any value of 60% or more of the greatest integrated charge of the charge storage units.

In the range imaging device according to the present invention, after calculating the integration time corresponding to the distance and the light intensity, the measurement control unit may continuously use the integration time until the integrated charge exceeds the first threshold.

In the range imaging device according to the present invention, after calculating the integration time corresponding to the distance and the light intensity, the measurement control unit may continuously use the integration time until the number of times of measuring the distance exceeds a preset predetermined number of times.

In the range imaging device according to the present invention, after calculating the integration time corresponding to the distance and the light intensity, the measurement control unit may change the integration time every preset number of frame cycles, based on the distance, the light intensity, and charge generated due to ambient light.

In the range imaging device according to the present invention, an emission cycle of the light pulses may be set to become longer as the integration time is increased.

In the range imaging device according to the present invention, the at least one pixel circuit may be disposed in an array in the light-receiving unit; and the measurement control unit may compare the integrated charges of the charge storage units of each of the at least one pixel circuit in a preset predetermined region in an array of the at least one pixel circuit, with the first threshold.

In the range imaging device according to the present invention, the at least one pixel circuit may include a charge discharging circuit (the charge discharge transistor GD of the embodiments) that discharges the charge generated in the photoelectric conversion element other than in a charge integration period of the charge storage units.

The range imaging method according to the present invention is a range imaging method that controls a range imaging device including at least one pixel circuit, a light source unit, a pixel drive circuit, a range image processing unit, and a measurement control unit, the at least one pixel circuit including a photoelectric conversion element, a plurality of charge storage units, and transfer transistors. The method including steps of: emitting light pulses in a measurement space that is a space targeted to measurement, as performed by the light source unit; turning on or off the transfer transistors that transfer charge to N (N≥3) charge storage units from the photoelectric conversion element, the charge being generated by the photoelectric conversion element at predetermined timing synchronizing with emission of the light pulses, according to incident light incident from the measurement space, as performed by the pixel drive circuit; calculating a distance to an object present in the measurement space as a measurement distance, based on charge integrated in each of the charge storage units, as performed by the range image processing unit; and sequentially decrementing an integration time by a predetermined first unit until integrated charge in the charge storage units becomes equal to or smaller than a predetermine first threshold, when the integrated charge exceeds the first threshold when calculating the integration time according to the integrated charge, the distance, and light intensity of the incident light, the integration time being the number of times of integrating the charge in the charge storage units, as performed by the measurement control unit.

[Advantageous Effects of the Invention]

As described above, according to the present invention, there can be provided a range imaging device and a range imaging method which can determine an integration time for integrating electrical charge required for performing distance measurement with predetermined accuracy, without saturating the charge storage units even when the reflectances of the objects in a measurement space or the distances to the objects from the range imaging device are unknown.

[Brief Description of the Drawings]

Fig. 1 is a schematic block diagram illustrating a configuration of a range imaging device according to a first embodiment of the present invention.
Fig. 2 is a circuit diagram illustrating an example of a configuration of a pixel circuit 321 disposed in a range image sensor 32 in the range imaging device according to the first embodiment of the present invention.
Fig. 3 is a timing chart illustrating transfer of electrical charge generated in a photoelectric conversion element PD to individual charge storage units CS.
Fig. 4 is a block diagram illustrating a configuration example of a measurement control unit 43 in the range imaging device according to the first embodiment.
Fig. 5A is a schematic diagram illustrating operation of integration time adjustment processing executed by an integrated charge determination section 431.
Fig. 5B is a schematic diagram illustrating operation of integration time adjustment processing executed by the integrated charge determination section 431.
Fig. 5C is a schematic diagram illustrating operation of integration time adjustment processing executed by the integrated charge determination section 431.
Fig. 6 is a diagram illustrating a configuration example of an integration time table stored in advance in an integration time table storage 436.
Fig. 7 is a flow chart illustrating an example of processing for calculating a distance between a range image sensor 32 and an object S performed by the range imaging device 1 according to the first embodiment.
Fig. 8 is a block diagram illustrating a configuration example of a measurement control unit 43A in a range imaging device according to a second embodiment.
Fig. 9 is a diagram illustrating a relationship between a maximum permissible exposure and eye-safe level integration time and light pulse period.
Fig. 10 is a flow chart illustrating an example of processing for calculating a distance between a range image sensor 32 and an object S performed by the range imaging device 1 according to the second embodiment.

[Description of the Embodiments]

<First Embodiment>

With reference to the drawings, a first embodiment of the present invention will be described.

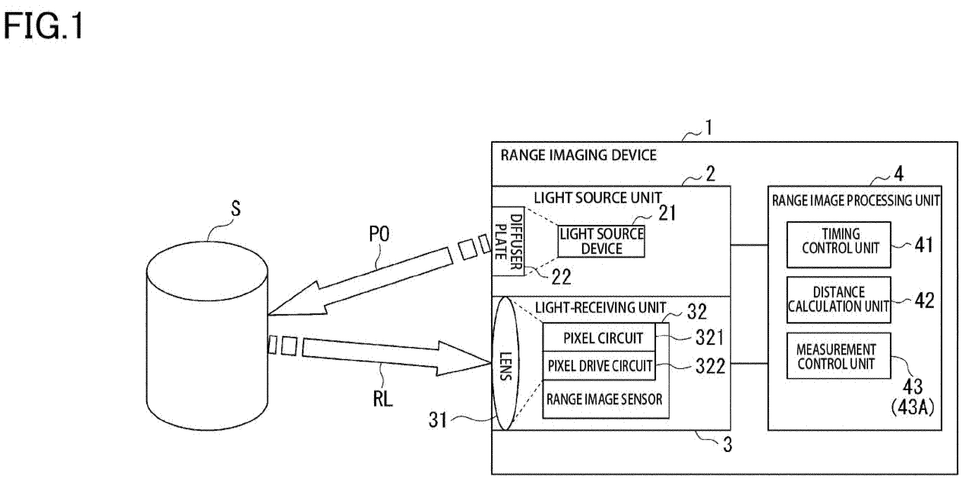

Fig. 1 is a schematic block diagram illustrating a configuration of a range imaging device according to the first embodiment of the present invention. Fig. 1 shows a range imaging device 1 that is a TOF type range imaging device including a light source unit 2, a light-receiving unit 3, and a range image processing unit 4. Fig. 1 also shows an object S whose distance is to be measured by the range imaging device 1. A range imaging device may be, for example, a range image sensor 32 (described later) in the light-receiving unit 3.
The light source unit 2 emits light pulses PO into a space as an imaging target where the object S is present whose distance is to be measured by the range imaging device 1 under the control of the range image processing unit 4. The light source unit 2 may be, for example, a surface-emitting semiconductor laser module such as a vertical-cavity surface-emitting laser (VCSEL). The light source unit 2 includes a light source device 21 and a diffuser plate 22.
The light source device 21 is a light source that emits laser light in the near infrared wavelength band (e.g., wavelength band of 850 nm to 940 nm) which serves as the light pulses PO to be emitted to the object S. The light source device 21 may be, for example, a semiconductor laser light emitting element. The light source device 21 emits pulsed laser light under the control of a timing control unit 41.

The diffuser plate 22 is an optical component that diffuses laser light in the near infrared wavelength band emitted from the light source device 21 over the emission surface area of the object S. Pulsed laser light diffused by the diffuser plate 22 is emitted as the light pulses PO and applied to the object S.

The light-receiving unit 3 receives reflected light RL arising from reflection of the light pulses PO from the object S, which is an object whose distance is to be measured by the range imaging device 1, and outputs a pixel signal according to the received reflected light RL. The light-receiving unit 3 includes a lens 31 and a range image sensor 32.

The lens 31 is an optical lens that guides the incident reflected light RL to the range image sensor 32. The lens 31 outputs the incident reflected light RL toward the range image sensor 32, so that the light can be received by (be incident on) pixel circuits provided to the light-receiving region of the range image sensor 32.

The range image sensor 32 is an imaging device used for the range imaging device 1. The range image sensor 32 includes a plurality of pixel circuits 321 disposed in a two-dimensional light-receiving region, and a pixel drive circuit 322 that controls the pixel circuits 321.

The pixel circuits 321 each include one photoelectric conversion element (e.g., photoelectric conversion element PD described later), a plurality of charge storage units (e.g., charge storage units CS1 to CS4 described later) corresponding to this photoelectric conversion element, and components that distribute charge to the individual charge storage units.

The range image sensor 32 distributes charge, which has been generated by the photoelectric conversion element under the control of the timing control unit 41, to the charge storage units. Also, the range image sensor 32 outputs pixel signals according to the charge distributed to the charge storage units. The range image sensor 32, in which a plurality of pixel circuits are arranged in a two-dimensional matrix, outputs single-frame pixel signals of the respective pixel circuits.

The range image processing unit 4 controls the range imaging device 1 and calculates a distance to the object S. The range image processing unit 4 includes the timing control unit 41, a distance calculation unit 42, and a measurement control unit 43.

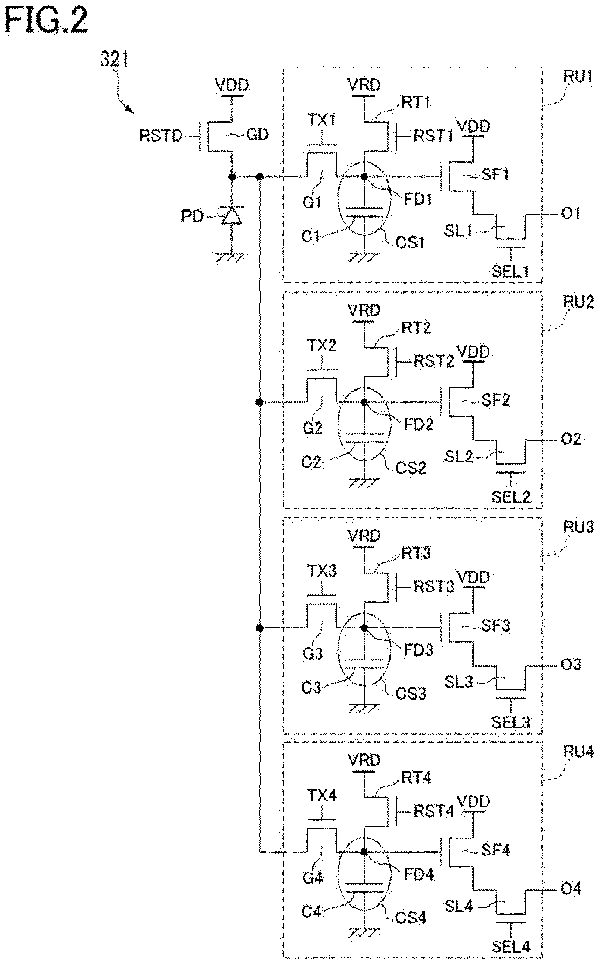

The timing control unit 41 controls timing of outputting several control signals required for measuring a distance, under the control of the measurement control unit 43. The various control signals refer to, for example, a signal for controlling emission of the light pulses PO, a signal for distributing the reflected light RL to the plurality of charge storage units, a signal for controlling the number of times of distribution per frame, and other signals. The number of times of distribution refers to the number of times of repetition of the processing for distributing charge to the charge storage units CS (see Fig. 2).

The distance calculation section 42 outputs distance information indicating a distance to the object S calculated based on the pixel signals outputted from the range image sensor 32, under the control of the measurement control unit 43. The distance calculation unit 42 calculates a delay time Td from when the light pulses PO are emitted until when the reflected light RL is received, based on the charge integrated in the plurality of charge storage units CS. The distance calculation unit 42 calculates a distance (measurement distance) from the range imaging device 1 to the object S according to the calculated delay time Td.

In a frame repeated in a frame cycle, the measurement control unit 43 calculates an integration time for integrating charge in the charge storage units CS (i.e., emission time of the light pulses PO) and a cycle of emitting the light pulses (emission cycle), based on the charge integrated in the charge storage units CS, the measurement distance calculated by the distance calculation unit 42, and the charge of ambient light (integrated charge Q1 which will be described later).

Then, the measurement control unit 43 controls timing for the timing control unit 41 and controls calculation for the distance calculation unit 42, according to the calculated integration time and emission cycle (described in detail later).

With this configuration, in the range imaging device 1, the light source unit 2 emits the light pulses PO in the near infrared wavelength band to the object S, the light-receiving unit 3 receives the reflected light RL reflected from the object S, and the range image processing unit 4 outputs distance information indicating a measurement distance between the object S and the range imaging device 1.

Although Fig. 1 shows a range imaging device 1 configured to include the range image processing unit 4 inside thereof, the range image processing unit 4 may be a component provided external to the range imaging device 1.

Specifically, the range imaging device according to the present embodiment calculates the distance between an object and the range image sensor 32 based on the charge integrated in the charge storage units CS.

Therefore, if the intensity of incident light is high and the charge generated in the photoelectric conversion element exceeds the capacity of the charge storage units CS during measurement distance calculation, it will be difficult to correctly calculate a measurement distance between the range imaging device 1 and the object S through distance calculation.

Furthermore, as the distance from the range imaging device 1 to the object S increases, or as the reflectance of the object S decreases, the intensity of the reflected light arising from reflection of the light pulses PO from the object S decreases.

Accordingly, the charge generated due to the reflected light in the photoelectric conversion element also decreases, and thus, being affected by noise, the accuracy of calculating a measurement distance decreases. For this reason, the integration time is required to be increased.

The above processing can be performed in auto exposure processing in which the integration time or the emission time of the light pulses PO is controlled according to charge integrated in the charge storage units.

Herein, if the intensity of reflected light decreases, the integration time is increased to increase the number of times that charge generated in the photoelectric conversion element by reflected light is integrated, and thus, charge required for calculating a measurement distance is integrated in the charge storage units, by which the accuracy in measurement distance as obtained will be improved.

However, since the reflectances of individual objects are rarely identical to each other in general but are different from each other, and since light intensity is inversely proportional to the distance to the object, if the integration time is set in advance to match a distant object, the charge storage units may become saturated with charge generated due to the reflected light from an object having high reflectance and located at a short distance from the range imaging device.

In addition, if the integration time is set to match a distant object in order to improve accuracy in measurement distance, and if distances to the range imaging device from other objects than the distant object are unknown and if an object is present at a short distance from the range imaging device 1, the charge storage units may become saturated with charge generated due to the reflected light from this object at the short distance due to the intensity of the reflected light from this object being high compared to the distant object.

Therefore, in the present embodiment, the measurement control unit 43 controls the light source unit 2 and the light-receiving unit 3 via the timing control unit 41 when capturing a range image (i.e., when performing processing of measuring a measurement distance) as will be described later, so that the charge storage units will not be saturated.

Next, the configuration of each pixel circuit 321 in the range image sensor 32 will be described.

Fig. 2 is a circuit diagram illustrating an example of a configuration of a pixel circuit 321 disposed in the range image sensor 32 in the range imaging device according to the first embodiment of the present invention. The pixel circuit 321 shown in Fig. 2 is a configuration example including, for example, four pixel signal readouts RU1 to RU4. The configuration of the pixel circuit 321 of the present embodiment is only an example and includes three or more, i.e., N $(N \geq 3)$, pixel signal readouts.

The pixel circuit 321 includes one photoelectric conversion element PD, a charge discharge transistor GD, and four pixel signal readouts RU (RU1 to RU4) which output voltage signals from respective output terminals O. Each of the pixel signal readouts RU includes a transfer transistor G, floating diffusion FD, charge storage capacity C, reset transistor RT, source follower transistor SF, and selection transistor SL. The floating diffusions FD (FD1, FD2, FD3, FD4) and the charge storage capacities C (C1, C2, C3, C4) configure the charge storage units CS (CS1, CS2, CS3, CS4).

In the pixel circuit 321 shown in Fig. 2, the pixel signal readout RU1 which outputs a voltage signal from an output terminal O1 includes a transfer transistor G1 (transfer MOS transistor), floating diffusion FD1, charge storage capacity C1, reset transistor RT1, source follower transistor SF1, and selection transistor SL1. In the pixel signal readout RU1, the floating diffusion FD1 and the charge storage capacity C1 configure a charge storage unit CS1. The pixel signal readouts RU2, RU3 and RU4 are configured similarly.

The photoelectric conversion element PD is an embedded photodiode which performs photoelectric conversion for incident light, generates charge corresponding to the incident light, and integrates the generated charge. In the present embodiment, incident light is incident from a space targeted to measurement.

In the pixel circuit 321, charge generated by photoelectric conversion of incident light by the photoelectric conversion element PD is distributed to the four charge storage units CS (CS 1 to CS4), and voltage signals corresponding to the distributed charge are outputted to the range image processing unit 4.

The configuration of each pixel circuit disposed in the range image sensor 32 is not limited to the configuration, as shown in Fig. 2, provided with the four pixel signal readouts RU (RU1 to RU4), but the pixel circuit may be configured to include one or more pixel signal readouts RU.

In response to each pixel circuit 321 of the range imaging device 1 being driven, the light pulses PO are emitted for an emission time To and reflected light RL is received by the range image sensor 32 after a delay time Td. Under the control of the timing control unit 41, the pixel drive circuit 322 causes integration drive signals TX1 to TX4 to supply charge generated in the photoelectric conversion element PD to the transfer transistors G1, G2, G3, G4 according to their respective timings in synchronization with emission of the light pulses PO, for sequential integration in the charge storage units CS1, CS2, CS3, CS4.

The pixel drive circuit 322 controls the reset transistors RT and the selection transistors SL using drive signals RST and SEL. The pixel drive circuit 322 causes the source follower transistors SF to convert the charge integrated in the charge storage units CS into electrical signals, and outputs the generated electrical signals to the distance calculation unit 42 via the output terminals O.

Under the control of the timing control unit 41, the pixel drive circuit 322 discharges the charge generated in the photoelectric conversion element PD to a power source VDD (erases the charge) using a drive signal RSTD.

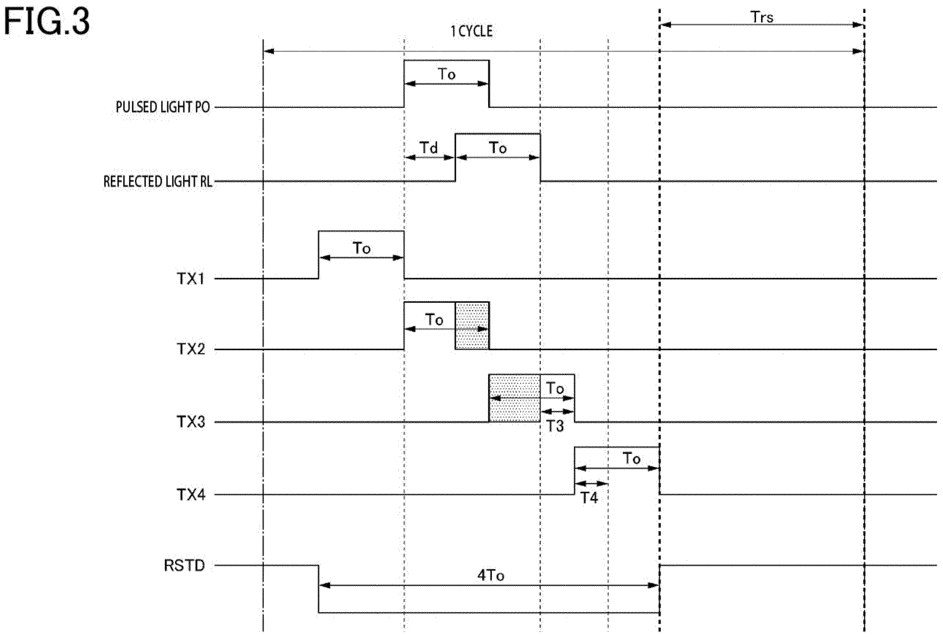

Fig. 3 is a timing chart illustrating transfer of charge generated in the photoelectric conversion element PD to the individual charge storage units CS.

In the timing chart of Fig. 3, the vertical axis indicates pulse level and the horizontal axis indicates time. The timing chart also shows an integration cycle which is repeated during the charge integration period in a frame. The timing chart shows a correlation between the light pulses PO and the reflected light RL on the time axis, timing of integration drive signals TX1 to TX4 supplied to the respective transfer transistors G1 to G4, and timing of the drive signal RSTD supplied to the charge discharge transistor GD.

The timing control unit 41 causes the light source unit 2 to emit the light pulses PO to the measurement space. Thus, the light pulses PO are reflected by the object and received by the light-receiving unit 3 as reflected light RL. Also, the photoelectric conversion element PD generates charge corresponding to ambient light and the reflected light RL. The pixel drive circuit 322, which transfers charge generated in the photoelectric conversion element PD to the charge storage units CS1 to CS4, performs on-off control (on-off processing) for the transfer transistors G1 to G4.

In other words, the pixel drive circuit 322 supplies the integration drive signals TX1 to TX4 to the transfer transistors G1 to G4 as H-level signals with a predetermined duration (emission time To, i.e., the same duration as the pulse width).

The pixel drive circuit 322, for example, turns on the transfer transistor G1 provided on the transfer path through which charge is transferred to the charge storage unit CS1 from the photoelectric conversion element PD. Thus, the charge photoelectrically converted by the photoelectric conversion element PD is integrated in the charge storage unit CS1 via the transfer transistor G1. After that, the pixel drive circuit 322 turns off the transfer transistor G1. Thus, charge transfer to the charge storage unit CS1 is stopped. In this way, the pixel drive circuit 322 causes the charge storage unit CS1 to integrate charge. The same applies to other charge storage units CS2, CS3 and CS4.

In this case, in a charge integration period in which charge is distributed to the charge storage units CS (period in which charge is integrated in the charge storage units CS in a frame), the integration cycle (the cycle in which charge is stored and integrated) is repeated so that the integration drive signals TX1, TX2, TX3, TX4 are supplied to the transfer transistors G1, G2, G3, G4.

Thus, charge corresponding to the incident light is transferred to the charge storage units CS1, CS2, CS3, CS4 from the photoelectric conversion element PD via the transfer transistors G1, G2, G3, G4. The integration cycle is repeated multiple times in the charge integration period.

Thus, charge is integrated in the charge storage units CS1, CS2, CS3, CS4 every integration cycle of each of the charge storage units CS1, CS2, CS3, CS4 in the charge integration period.

When repeating the integration cycle of each of the charge storage units CS1, CS2, CS3, CS4, after completing charge transfer (distribution) to the charge storage unit CS4, the pixel drive circuit 322 turns on the charge discharge transistor GD provided on the discharge path through which charge is discharged from the photoelectric conversion element PD, by supplying an H-level drive signal RSTD thereto.

Thus, the charge discharge transistor GD discards the charge generated in the photoelectric conversion element PD before restarting the integration cycle of the charge storage unit CS1 and after completing the previous integration cycle of the charge storage unit CS4 (i.e., the photoelectric conversion element PD is reset).

The pixel drive circuit 322 sequentially performs signal processing such as A/D conversion processing for the voltage signals from all the pixel circuits 321 disposed in the light-receiving unit 3 for each row (horizontal array) of the pixel circuits 321.

After that, the pixel drive circuit 322 sequentially outputs the voltage signals subjected to signal processing to the distance calculation unit 42, in the order of columns of the pixel circuits disposed in the light-receiving unit 3.

As described above, the pixel drive circuit 322 repeatedly integrates charge in the charge storage units CS and discards charge photoelectrically converted by the photoelectric conversion element PD over one frame. Thus, charge corresponding to the amount of light received by the range imaging device 1 in a predetermined time interval is integrated in the individual charge storage units CS. The pixel drive circuit 322 outputs electrical signals corresponding to single-frame charges integrated in each of the charge storage units CS to the distance calculation unit 42.

Due to the relationship between the timing of emitting the light pulses PO and the timing of integrating charge in each of the charge storage units CS (CS1 to CS4) (integration timing), charge corresponding to external light components, such as a ambient light component before emission of the light pulses PO, is held in the charge storage unit CS1. Also, charge corresponding to the reflected light RL and the external light component is distributed and held in the charge storage units CS2, CS3 and CS4. Distribution of charge to the charge storage units CS2 and CS3 or the charge storage units CS3 and CS4 (distribution ratio) can be expressed by a ratio according to the delay time Td from when the light pulses PO are reflected by the object S until when the reflected light is incident on the range imaging device 1.

Referring back to Fig. 1, the distance calculation unit 42 calculates a delay time Td using this principle through the following Formula (1) or Formula (2).

$$Td = To \times (Q3-Q1)/(Q2+Q3-2 \times Q1) \qquad \ldots (1)$$

$$Td = To + To \times (Q4-Q1)/(Q3+Q4-2 \times Q1) \qquad \ldots (2)$$

where To represents the period of emitting the light pulses PO, Q1 represents charge integrated in the charge storage unit CS1, Q2 represents charge integrated in the charge storage unit CS2, Q3 represents charge integrated in the charge storage unit CS3, and Q4 represents charge integrated in the charge storage unit CS4. For example, if Q4=Q1, the distance calculation unit 42 calculates a delay time Td using Formula (1) and, if Q2=Q1, calculates a delay time Td using Formula (2).

In Formula (1), charge generated due to reflected light is integrated in the charge storage units CS2 and CS3, but is not integrated in the charge storage unit CS4. In Formula (2), charge generated due to reflected light is integrated in the charge storage units CS3 and CS4, but is not integrated in the charge storage unit CS2.

In Formula (1) or (2), of the charges integrated in the charge storage units CS2, CS3 and CS4, the component corresponding to the external light component is assumed to be the same in amount as the charge integrated in the charge storage unit CS1.

The distance calculation unit 42 multiplies the delay time calculated through Formula (1) or (2) by the speed of light (velocity) to calculate a round-trip measurement distance to the object S.

Then, the distance calculation unit 42 calculates 1/2 of the round-trip distance calculated above (delay time Td × c (light speed) /2) to calculate a distance to the object S from the range image sensor 32 (i.e., the range imaging device 1).

Time Trs represents the period of the drive signal RSTD supplied to the charge discharge transistor GD being at the H level so as not to allow charge generated due to incident light to remain (stay) in the photoelectric conversion element PD after completing distribution of charge to the charge storage unit CS4 from the photoelectric conversion element PD in one integration cycle shown in Fig. 3.

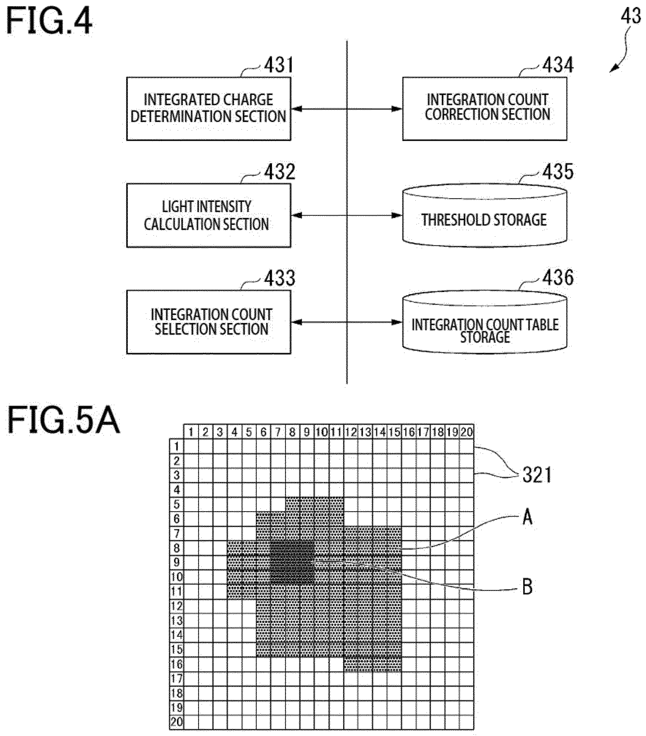

Fig. 4 is a block diagram illustrating a configuration example of the measurement control unit 43 in the range imaging device according to the first embodiment. In Fig. 4, the measurement control unit 43 includes an integrated charge determination section 431, light intensity calculation section 432, integration time selection section 433, integration time correction section 434, threshold storage 435, and integration time table storage 436.

The integrated charge determination section 431 reads a first threshold from the threshold storage 435, for comparison with the integrated charge. The first threshold may be set, for example, to either 60% or 60% or more of the maximum storage capacity of the charge storage units CS.

In actual operation, considering variation in charge generated due to the reflected light and integrated in the charge storage units CS, the first threshold is usually set to a value, for example, corresponding to about 90% to 95% of the maximum storage capacity as an empirical range.

However, if the first threshold is set to 90% to 95% of the maximum storage capacity, the photoelectric conversion element PD may generate charge not only by reflected light but also by incident light containing ambient light, and therefore, when the effect of ambient light is considered, it is assumed that the charge storage units CS may be saturated depending on the intensity of the ambient light. When the threshold is permitted to have a margin with respect to variation in charge generated due to incident light in the photoelectric conversion element PD due to variation in ambient light, preferred results were experimentally obtained with 60% or more.

Thus, the integrated charge determination section 431 determines whether the integrated charge in each of the charge storage units CS of the individual pixel circuits 321 exceeds the preset first threshold. The pixel circuits 321 referred to herein correspond to a group of pixel circuits in a preset predetermined position area (e.g., center region in the array of the pixel circuits 321 in the range image sensor 32) in an array (in two-dimensional array or in a lattice pattern) of the pixel circuits.

In the above description, the pixel circuits 321 in a preset predetermined position area are configured to be used; however, all the pixel circuits 321 in the range image sensor 32 may be configured to be used for the above determination.

In this case, the integrated charge determination section 431 reads a first adjustment count (first unit) stored in advance in the threshold storage 435.

Then, if the integrated charge has exceeded the first threshold, the integrated charge determination section 431 subtracts the preset first adjustment time (fixed integration time) from the integration time currently used, and controls the light source unit 2 and the light-receiving unit 3 using the subtraction result as a new integration time (adjusted integration time).
The integrated charge determination section 431 repeatedly executes the processing of subtracting the first adjustment time from the integration time (or the adjusted integration time) until the integrated charge becomes equal to or smaller than the first threshold.

If the integrated charge is equal to or smaller than the first threshold, the integrated charge determination section 431 outputs control information indicating non-saturation to the light intensity calculation section 432.

Figs. 5A to 5C are schematic diagrams illustrating the operation of integration time adjustment processing, executed by the integrated charge determination section 431.

As an example for explanation, Figs. 5A to 5C show an array of 400 pixel circuits 321 with 20 rows and 20 columns arranged in the range image sensor 32 of the light-receiving unit 3.

Fig. 5A shows a group of pixel circuits 321 in each of which the integrated charges of the charge storage units CS exceed the first threshold (saturated), in an array of the pixel circuits 321 arranged in the range image sensor 32, or specifically, shows that in the region B included in the region A, greatest integrated charge is stored in the pixel circuits 321.

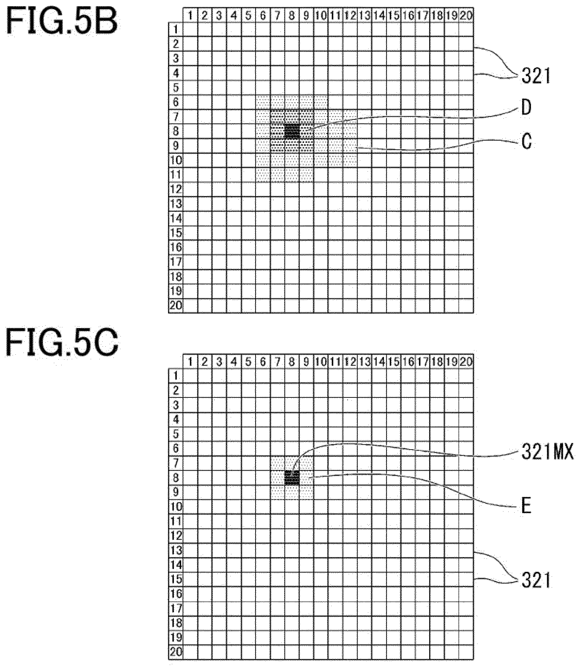

Fig. 5B shows a saturation state of the charge storage units CS as a result of the integrated charge determination section 431 subtracting the first adjustment time from the integration time for calculation of an adjusted integration time in each of the pixel circuits 321 arranged in an array in the range image sensor 32, and controlling the timing control unit 41 and the distance calculation unit 42.

Fig. 5B shows that, in a group of pixel circuits 321 in the region C, the integrated charge exceeds the first threshold (saturated). Fig. 5B shows that, due to the integration time being decremented, saturation is reduced in the charge storage units CS of each of the pixel circuits 321 in the region C compared to the region A shown in Fig. 5A, but shows that saturation is not completely eliminated. Fig. 5C shows that greatest integrated charge is stored in the pixel circuits 321 in the region D included in the region C.

Fig. 5C shows a saturation state of the charge storage units CS as a result of the integrated charge determination section 431 further subtracting the first adjustment time from the integration time, than in Fig. 5B, for calculation of an adjusted integration time in each of the pixel circuits 321 arranged in an array in the range image sensor 32, and controlling the timing control unit 41 and the distance calculation unit 42.

Fig. 5C shows that there are no pixel circuits 321 in which the integrated charge exceeds the first threshold (saturates the charge storage units).

Herein, the region E shows a group of pixel circuits in each of which larger integrated charge is stored in the charge storage units CS, compared to other regions, in the pixel circuits 321 arranged in the array in the range image sensor 32. Of the pixel circuits 321 included in the region E, the pixel circuit 321 including the charge storage units CS having the greatest integrated charge is referred to as a pixel circuit 321MAX.

The light intensity calculation section 432 divides the integrated charge of the charge storage units CS of the pixel circuit 321MAX (charge storage units having greatest integrated charge) by the integration time (not the newly calculated adjusted integration time but the integration time when acquiring the integrated charge) and uses the division result as a light intensity.

In the present embodiment, the integration time is adjusted in the integrated charge calculation section 431 by subtraction of the adjusted integration time (fixed integration time) but, if the integrated charge exceeds the first threshold, the integration time used currently may be multiplied by a predetermined ratio $\alpha$ (fixed ratio, $\alpha<1$) and the multiplication result may be used as a new integration time (adjusted integration time).

Alternatively, if the integrated charge exceeds the first threshold, the integrated charge determination section 431 may divide the integration time used currently by a predetermined ratio $\beta$ (fixed ratio, $\beta>1$) and the division result may be used as a new integration time (adjusted integration time).

After the integration time being corrected by the integrated charge determination section 431, the light intensity calculation section 432 detects greatest integrated charge in the pixel circuits 321 in the above predetermined region.

The light intensity calculation section 432 divides the greatest integrated charge by the integration time when acquiring the greatest integrated charge, not by the new integration time (adjusted integration time) calculated by the integrated charge determination section 431, to calculate charges increased by one integration (i.e., integrated charges obtained by one emission of the light pulses PO) as light intensity of incident light.

The integration time selection section 433 reads the distance, which has been calculated from the integrated charges of the pixel circuit 321 from which the greatest integrated charge has been detected, from the distance calculation unit 42.

Also, the integration time selection section 433 reads the light intensity calculated by the light intensity calculation section 432.

Then, the integration time selection section 433 refers to the integration time table storage 436, searches for (selects) an integration time corresponding to the combination of the distance and the light intensity, and reads the found (selected) integration time from the integration time table.

The integration time selection section 433 defines the read integration time to be a new integration time and outputs it to the integration time correction section 434.

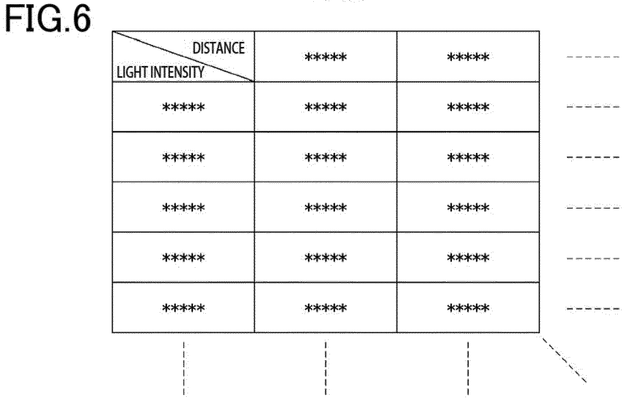

Fig. 6 is a diagram illustrating a configuration example of an integration time table stored in advance in the integration time table storage 436.

The integration time table is a lookup table having a configuration in which combinations of measurement distance from the range imaging device 1 to the object with light intensity as charges obtained by one emission are correlated with respective integration times.

As described above, the integration time selection section 433 refers to the integration time table shown in Fig. 6 and extracts the integration time in a cell (of the combinations) where the value of the distance (table column) intersects the value of the light intensity (table row).

Referring back to Fig. 4, the integration time correction section 434 reads a second threshold used for comparison with light intensity from the threshold storage 435. The second threshold is set, for example, as the charge that can be obtained in one integration and not exceeding the maximum storage capacity of the charge storage units CS when multiplied by the integration time, and is set to determine whether to execute the processing of calculating an integration time with which the charge storage units CS will not be saturated. In other words, since the charge generated by the photoelectric conversion element PD may vary depending on the variation in intensity of reflected light, the second threshold is used for detecting the case where the charge storage units CS can be saturated depending on the intensity of reflected light. Accordingly, considering variation in intensity of ambient light similarly to the case of the first threshold, the second threshold is set as charge integrated in one integration so that multiplication thereof by an optimum integration time will be 60% of the maximum storage capacity of the charge storage units CS.

Then, the integration time correction section 434 compares the light intensity with the second threshold and, if the light intensity exceeds the second threshold, reads and acquires the charge stored in the charge storage unit CS1, i.e., the ambient light charge generated due to an external light component, such as ambient light (external light signal level, integrated charge Q1), from the distance calculation unit 42.

The integration time correction section 434 refers to the threshold storage 435 to read a second adjustment time corresponding to the ambient light charge, from the correspondence table in which ambient light charge is correlated with the second adjustment time (second unit).

Then, the integration time correction section 434 subtracts the second adjustment time, which has been read from the correspondence table, from the integration time calculated by the integration time selection section 433, to obtain the subtraction result as a corrected integration time.

Then, the measurement control unit 43 controls timing of the timing control unit 41 and controls calculation of the distance calculation unit 42 in each frame, according to the corrected integration time calculated by the integration time correction section.

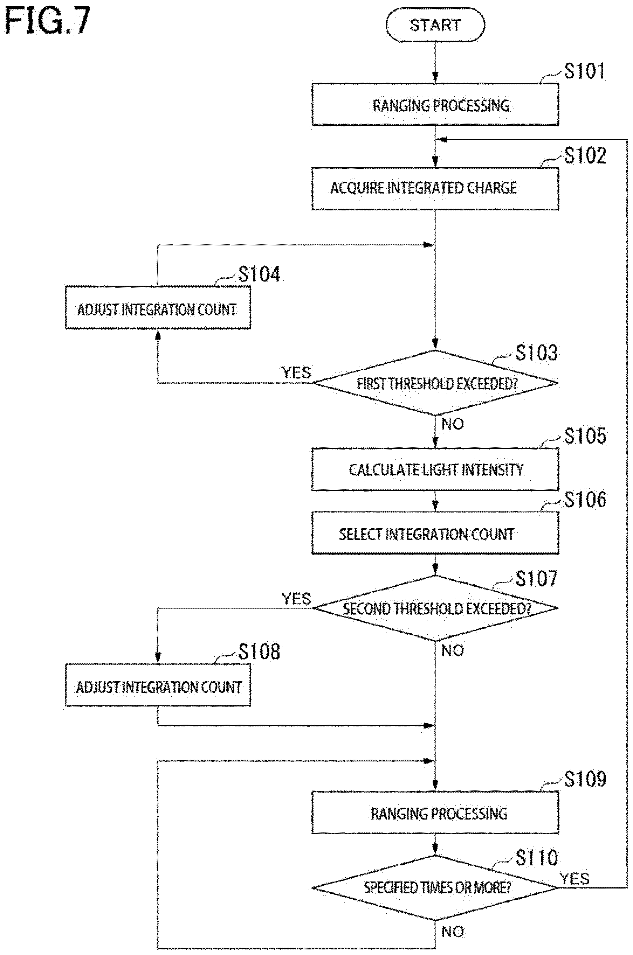

Fig. 7 is a flow chart illustrating an example of the processing for calculating a distance between the range image sensor 32 and the object S performed by the range imaging device 1 according to the first embodiment. When the range imaging device 1 is activated, a preset predetermined integration time is set as a default value, and processing is started from the following step S101.

Step S101:

The measurement control unit 43 controls the light source unit 2 and the light-receiving unit 3 according to the preset predetermined integration time and light pulse emission condition.

The light source unit 2 emits the light pulses PO according to a predetermined cycle, i.e., a predetermined integration cycle, and the above integration time (emission time).

The pixel drive circuit 322 executes ranging processing per frame and distributes charge generated due to the reflected light RL in the photoelectric conversion element PD to the charge storage units CS1, CS2, CS3, CS4 of each of the pixel circuits 321 for integration therein, according to the predetermined integration cycle and the reference integration time.

Then, the distance calculation unit 42 calculates a distance (reference measurement distance) according to the charge integrated in each of the charge storage units CS1, CS2, CS3, CS4.

Step S102:

From the distance calculation unit 42, the integrated charge determination section 431 sequentially acquires the integrated charges (voltage signals) which the distance calculation unit 42 has acquired from the charge storage units CS of each of the pixel circuits 321 in the light-receiving unit 3.

Then, the integrated charge determination section 431 reads a first threshold from the threshold storage 435 for comparison with the integrated charges.

Step S103:

The integrated charge determination section 431 compares the read first threshold with the integrated charge acquired from each of the charge storage units CS.

Then, the integrated charge determination section 431 determines whether the integrated charge exceeds the first threshold in each of the charge storage units CS.

In this case, if there is a charge storage unit CS having integrated charge exceeding the first threshold, the integrated charge determination section 431 allows processing to proceed to step S104.

If there is no charge storage unit CS having integrated charge exceeding the first threshold, the integrated charge determination section 431 allows processing to proceed to step S105.

Step S104:

The integrated charge determination section 431 reads a first adjustment time for adjusting the integration time from the threshold storage 435.

Then, the integrated charge determination section 431 subtracts the first adjustment time from the integration time to calculate an adjusted integration time.

Thus, the integrated charge determination section 431 sets the calculated adjusted integration time as an integration time newly used for measuring a measurement distance, and allows processing to proceed to step S103.

Step S105:

The light intensity calculation section 432 detects greatest integrated charge from the integrated charges of the individual charge storage units CS of the pixel circuits 321 in the light-receiving unit 3.

Then, the light intensity calculation section 432 divides the detected integrated charges by the integration time when obtaining the greatest integrated charge, and obtains the division result as charges, i.e., light intensity, that can be obtained in one integration .

The light intensity calculation section 432 outputs the calculated light intensity to the integration time selection section 433.

Step S106:

The integration time selection section 433 reads the distance calculated by the distance calculation unit 42 based on the charges of the charge storage units CS of the pixel circuit 321 having the greatest integrated charge.

Then, the integration time selection section 433 refers to the integration time table of the integration time table storage 436, and reads and detects an integration time corresponding to the combination of the above distance and light intensity.

The integration time selection section 433 outputs the read integration time to the integration time correction section 434.

In this case, the measurement control unit 43 resets the frame count to 0.

Step S107:

If an integration time is supplied from the integration time selection section 433, the integration time correction section 434 reads the preset second threshold from the threshold storage 435.

Then, the integration time correction section 434 compares the light intensity with the second threshold to determine whether the light intensity exceeds the second threshold. This determination processing is performed because, if the light intensity exceeds the second threshold, the charge storage units CS may be saturated.

In this case, if the light intensity exceeds the second threshold, the integration time correction section 434 allows processing to proceed to step S108.

However, if the light intensity is equal to or lower than the second threshold, the integration time correction section 434 allows processing to proceed to step S109.

If the light intensity is equal to or lower than the second threshold, the charge generated due to the reflected light RL may be small even when the ambient light is taken into account, and therefore, the integration time is not corrected using the second adjustment time described later, because the charge storage units CS are less likely to be saturated.

Step S108:

If the light intensity exceeds the second threshold, the integration time correction section 434 reads the ambient light charge (integrated charge Q1) generated due to an external light component such as ambient light, from the distance calculation unit 42.

Then, the integration time correction section 434 refers to the correspondence table stored in the threshold storage 435, and reads a second adjustment time corresponding to the read ambient light charge.

The integration time correction section 434 subtracts the second adjustment time from the integration time, and obtains an integration time resulting from the subtraction as a corrected integration time.

Step S109:

The measurement control unit 43 defines the corrected integration time supplied from the integration time correction section 434 to be an integration time, and controls the light source unit 2 and the light-receiving unit 3 according to a predetermined light pulse emission condition.

In other words, the light source unit 2 emits the light pulses PO according to the predetermined cycle, i.e., the predetermined integration cycle, and the above corrected integration time (emission time).

The pixel drive circuit 322 executes ranging processing per frame and distributes charge generated due to the reflected light RL in the photoelectric conversion element PD to the charge storage units CS1, CS2, CS3, CS4 of each of the pixel circuits 321 for integration therein, according to the predetermined integration cycle and the above corrected integration time.

Then, the distance calculation unit 42 calculates a measurement distance according to the charge integrated in each of the charge storage units CS1, CS2, CS3, CS4.

In this case, the measurement control unit 43 increments the frame count (adds 1 to the frame count).

Step S110:

The measurement control unit 43 determines whether the frame count according to the current integration time is equal to or greater than a current specified count.

In this case, if the frame count is smaller than the preset specified count, the measurement control unit 43 allows processing to proceed to step S109.

However, if the frame count is equal to or greater than the preset specified count, the measurement control unit 43 allows processing to proceed to step S102.

The preset specified count is a value that sets the timing for calculating a new integration time by changing the integration time calculated by the integration time correction section 434.

The above embodiment describes control under which the timing for changing the integration time used for measurement processing is determined based on the frame count; however, at step S110, if the integrated charges in the charge storage units CS exceed the first threshold as a result of determining whether the integrated charges exceed the first threshold, processing may proceed to step S102 at which the control for changing the integration time may be performed.

According to the present embodiment, if the integrated charges in the charge storage units CS exceed the first threshold at the timing of changing the integration time, the first adjustment time is sequentially subtracted from the integration time to calculate an integration time with which the integrated charges will not exceed the first threshold. Thus, not only the distance but also the reflectance of the object is considered by calculating an integration time based on the intensity of the reflected light RL from the object, unlike the case of determining an integration time based on only a distance. Therefore, the distance between the range imaging device and the object can be correctly measured without the charge storage units CS being saturated even when there is an object with a high reflectance at a short distance.

According to the present embodiment, a light intensity is calculated from the reflected light RL every time the light pulses PO are emitted, and if the light intensity of the reflected light RL exceeds the second threshold, correction is performed by subtracting the second adjustment time corresponding to the ambient light from the integration time calculated for the light intensity, because the integrated charges can saturate the charge storage units CS due to use of the new integration time, depending on the intensity of the ambient light and the intensity of the reflected light RL. Thus, a new integration time for final use can be calculated so that the charge storage units CS will not be saturated. Therefore, even when the reflectances of the individual objects in the measurement space are unknown, and even when the distances from the range imaging device are unknown, and even when the intensity of the ambient light is high, an integration time that can integrate charges required for measuring a measurement distance with predetermined accuracy can be determined, without saturating the charge storage units.

According to the present embodiment, an integration time that can integrate charges required for measuring a measurement distance with predetermined accuracy can be determined, without saturating the charge storage units. Thus, saturation of the charge storage units CS can be prevented, the SN ratio that is a ratio between signal (charges generated due to reflected light RL) and noise (charges generated due to ambient light) can be increased, and the accuracy for measuring a measurement distance can be improved.

<Second Embodiment>

With reference to the drawings, a second embodiment of the present invention will be described.

The range imaging device according to the second embodiment of the present invention has a configuration similar to that of the first embodiment shown in Fig. 1.

Hereinafter, only operations different from those of the range imaging device of the first embodiment will be described.

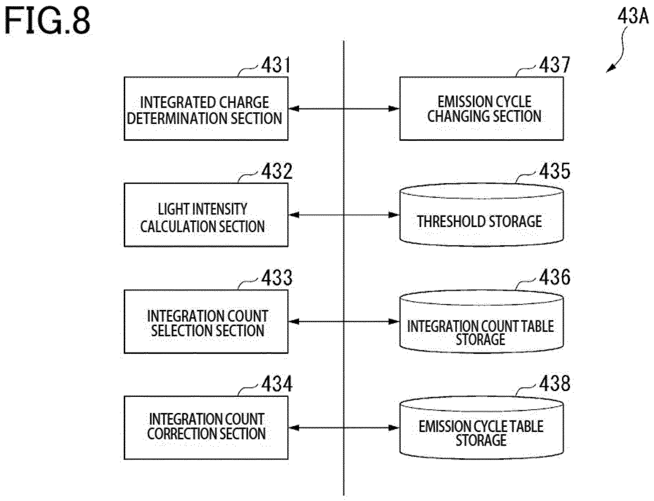

Fig. 8 is a block diagram illustrating a configuration example of a measurement control unit 43A in the range imaging device according to the second embodiment. In Fig. 8, the measurement control unit 43A includes an integrated charge determination section 431, light intensity calculation section 432, integration time selection section 433, integration time correction section 434, threshold storage 435, integration time table storage 436, emission cycle changing section 437, and emission cycle table storage 438.

In the first embodiment described above, the length of time of the integration cycle (duration) shown in Fig. 3 is fixed to a predetermined preset specified time, even when the integration time is changed.

However, if the integration time is simply increased, the emission time of the light pulses PO may also be increased. In this case, if the objects include humans, it is unavoidable that laser light is continued to be actively and deliberately emitted to the objects including humans.

Specifically, if the integration time is simply increased due to the distance to the object from the range imaging device 1 being long, the safety standards stipulating the effects on the human body (JIS C 6801 stipulating so-called eye-safety standards), e.g., the maximum permissible exposure (MPE), will not necessarily be satisfied due to the pulsed light emitted from the laser light source.

Therefore, in the present embodiment, considering the case where the objects include humans, the emission cycle changing section 437 performs measurement control under which the effects of laser light on humans are reduced to satisfy eye-safety standards (e.g., exposure is suppressed, to be a level not exceeding the maximum permissible exposure) (detailed processing will be described later).

In the emission cycle table storage 438, an emission cycle table showing correlation between emission time and emission cycle is stored in advance. In the emission cycle table, emission cycles satisfying the eye-safety standards are correlated with integration times (i.e., emission times)

The integration cycle for integrating charge in the charge storage units CS corresponds to 1 cycle shown in Fig. 3, which corresponds to an emission cycle for emitting the light pulses PO. In the present embodiment, the emission cycle changing section 437 adjusts the time Trs to adjust the emission cycle, which is the cycle for emitting the light pulses PO, according to the integration time (emission time) so as to satisfy the eye-safety standards.

In other words, the emission cycle is adjusted by the time Trs shown in Fig. 3 being changed according to the integration time (emission time). Herein, from time Ts when the light pulses PO are emitted until the end of the integration cycle, the emission cycle is calculated as 2To (width of light pulse) + Trs, with the pulse period being 3To + Trs.

The emission cycle is calculated as a cycle that does not exceed the maximum permissible exposure calculated from the set integration time as well as the intensity and width of the light pulses used. In the present embodiment, the intensity and width of the light pulses used are fixed, and the eye-safety standards are satisfied by changing only the emission cycle (pulse period that is the period for emitting light pulses) according to the integration time.

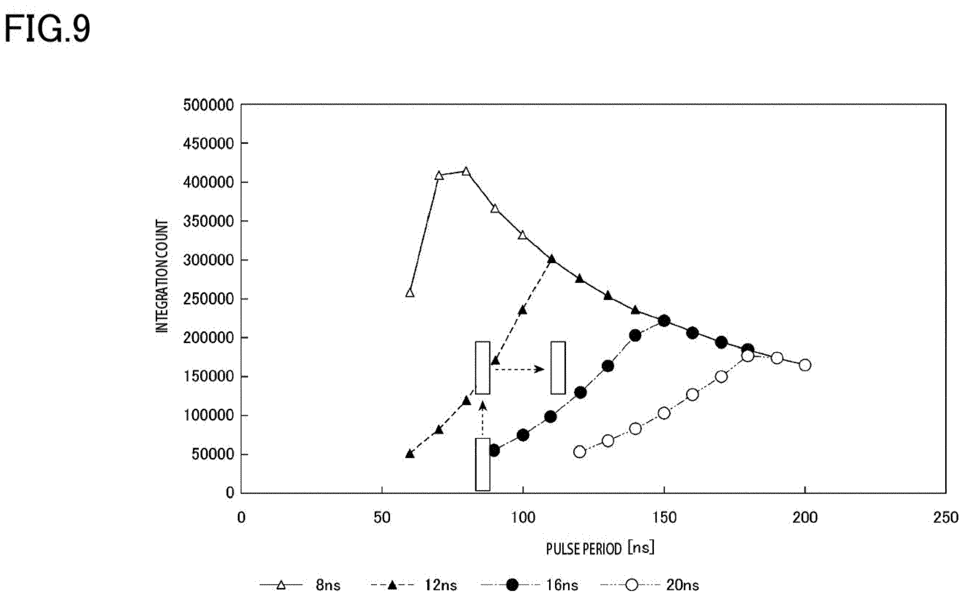

Fig. 9 is a diagram illustrating a relationship of maximum permissible exposure to eye-safe integration time and light pulse period of emitting light pulses. In Fig. 9, the vertical axis indicates integration time and the horizontal axis indicates pulse period. As pulse widths, the solid line indicates 8 ns, the dashed line indicates 12 ns, the dash-dot line indicates 16 ns, and the dash-dot-dot line indicates 20 ns.

Fig. 9 shows limit lines of maximum permissible exposure determined by the integration time and the pulse period, calculated for the individual pulse widths of the light pulses PO having a predetermined intensity.

For example, it is shown that, when the 8 ns-width light pulses indicated by the solid line are used, a combination of the integration time above the solid line with the pulse width may allow exposure exceeding the maximum permissible exposure. The same applies to other pulse widths of 12 ns indicated by the dashed line, 16 ns indicated by the dash-dot line, and 20 ns indicated by the dash-dot-dot line.

For example, when the light pulses PO have a pulse width of 12 ns indicated by the dashed line and when the integration time is increased from 50,000 to 160,000 at a pulse period of 90 ns, the coordinate points determined by the integration time and the pulse period may be above the dashed line.

In other words, when the pulse period is 90 ns and the integration time is 160,000, exposure may exceed the eye-safety criteria for the pulse width of 12 ns.

Therefore, if the integration time is 160,000, the pulse period may be extended to 110 ns to bring the coordinate points determined by the integration time and the pulse period to a position below the dashed line.

Thus, the coordinate points can be positioned below the dashed line so that, if the integration time is set to 160,000 and the light pulses PO with the pulse width of 12 ns are repeatedly emitted 160,000 times, exposure can be lower than the eye-safety criteria for the pulse width of 12 ns (can satisfy the standards).

In the emission cycle table of the present embodiment, an emission cycle (i.e., time Trs) satisfying the eye-safety standards is set for each integration time, being correlated with the intensity and width of the light pulses PO used, based on the relationship between the pulse widths (fixed in the present embodiment), integration time, and pulse period shown in Fig. 9. In the emission cycle table, the emission cycle is set to become longer as the integration time (emission time) is increased so that the eye-safety standards can be satisfied.

If the emission cycle for emitting the light pulses PO is short, charge corresponding to the set integration time is integrated in the charge storage units CS, followed by reading the charge integrated in each of the charge storage units CS.

Then, after reading the charge, the various processing described above, such as distance calculation to the object or correction, are executed according to the charges read from the charge storage units CS.

In this case, since the duration of one frame is limited, as the time that can be used for distance calculation or correction is increased, the arithmetic load is decreased accordingly to stabilize the system operation.

Therefore, in normal setting, the shorter emission cycle of emitting the light pulses PO is more suitable, from the perspective of increasing the time that can be used for distance calculation or correction.

However, if the emission cycle of emitting the light pulses PO is excessively short, the delay time for the light reflected by the distant object to return becomes relatively longer, and this reflected light may be incident in the subsequent emission cycle for integration .

Accordingly, while the length of the emission time Trs in one integration is determined to be at some level or more, stability of the system operation will be improved more with a shorter emission cycle as described above, and therefore, the emission cycle is required to be determined from the perspective of the integration time and eye-safety standards, in a comprehensive manner.

Referring back to Fig. 8, the emission cycle changing section 437 refers to the emission cycle table in the emission cycle table storage 438, and reads an emission cycle corresponding to the corrected integration time calculated by the integration time correction section 434.

The corrected integration time is supplied from the emission cycle changing section 437 as an integration time, and an integration cycle is supplied, with the time Trs being adjusted based on the emission cycle corresponding to the eye-safety standards. Then, the measurement control unit 43 controls the light source unit 2 and the light-receiving unit 3 according to the light pulse emission condition of the integration time and the integration period.

In other words, the light source unit 2 emits the light pulses PO according to the predetermined emission cycle, i.e., the predetermined integration cycle, and the above corrected integration time (emission time).

The pixel drive circuit 322 executes ranging processing per frame. The pixel drive circuit 322 distributes charge generated due to the reflected light RL in the photoelectric conversion element PD to the charge storage units CS1, CS2, CS3, CS4 of each of the pixel circuits 321 for integration therein, according to the predetermined integration cycle and the above corrected integration time.

Then, the distance calculation unit 42 calculates a measurement distance according to the charge integrated in each of the charge storage units CS1, CS2, CS3, CS4.

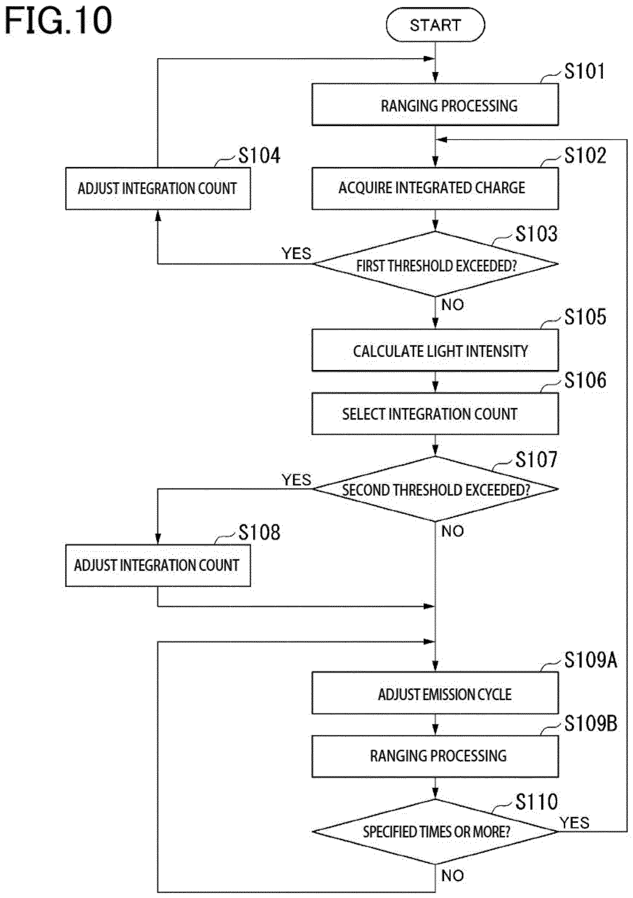

Fig. 10 is a flow chart illustrating an example of the processing for calculating a measurement distance between the range image sensor 32 and the object S performed by the range imaging device 1 according to the second embodiment. When the range imaging device 1 is activated, a preset predetermined integration time and a predetermined emission cycle are set as default values, and processing is started from step S101 of the flow chart of Fig. 10.

Since steps S101 to S108 remain the same, processing from steps S109A to S110 will be described.

Step S109A:

If a corrected integration time is supplied from the integration time correction section 434, the emission cycle changing section 437 refers to the emission cycle table in the emission cycle table storage 438.

Then, the emission cycle changing section 437 reads an emission cycle corresponding to the corrected integration time calculated by the integration time correction section 434, from the emission cycle table.

The emission cycle changing section 437 outputs the read emission cycle to the measurement control unit 43.

Step S109B:

The measurement control unit 43 defines the corrected integration time supplied from the emission cycle changing section 437 to be an integration time, and controls the light source unit 2 and the light-receiving unit 3 according to an light pulse emission condition where the emission cycle corresponds to the integration time.

Thus, the light source unit 2 emits the light pulses PO corresponding to the corrected integration time (emission cycle) calculated by the integration time correction section 434, and corresponding to the emission cycle calculated by the emission cycle changing section 437 according to the corrected integration time.

The pixel drive circuit 322 executes ranging processing per frame and distributes charge generated due to the reflected light RL in the photoelectric conversion element PD to the charge storage units CS1, CS2, CS3, CS4 of each of the individual pixel circuits 321 for integration therein, according to the corrected integration time calculated by the integration time correction section 434, and the emission cycle calculated by the emission cycle changing section 437 according to the corrected integration time.

Then, the distance calculation unit 42 calculates a measurement distance according to the charge integrated in each of the charge storage units CS1, CS2, CS3, CS4.

In this case, the measurement control unit 43 increments the frame count (adds 1 to the frame count).

Step S110:

The measurement control unit 43 determines whether the frame count according to the current integration time is equal to or greater than the current specified count.

In this case, if the frame count is smaller than the preset specified count, the measurement control unit 43 allows processing to proceed to step S109A.

However, if the frame count is equal to or greater than the preset specified count, the measurement control unit 43 allows processing to proceed to step S102.

The specified count is a value that sets the timing for calculating a new integration time by changing the corrected integration time calculated by the integration time correction section 434.

According to the present embodiment, as in the first embodiment, if the integrated charges in the charge storage units CS exceed the first threshold at timing of changing the integration time, the first adjustment time is sequentially subtracted from the integration time to calculate an integration time with which the integrated charges will not exceed the first threshold. Thus, not only the distance but also the reflectance of the object is considered by calculating an integration time based on the intensity of the reflected light RL from the object, unlike the case of determining an integration time based on only a distance. Therefore, the distance between the range imaging device and the object can be correctly measured without the charge storage units CS being saturated even when there is an object with a high reflectance at a short distance.

According to the present embodiment, a light intensity is calculated from the reflected light RL every time the light pulses PO are emitted, and if the light intensity of the reflected light RL exceeds the second threshold, the integrated charges can saturate the charge storage units CS due to use of the new integration time, depending on the intensity of the ambient light and the intensity of the reflected light RL. Therefore, correction is made by subtracting the second adjustment time corresponding to the ambient light from the integration time calculated according to the light intensity. Thus, a new integration time for final use can be calculated so that the charge storage units CS will not be saturated. Therefore, even when the reflectances of the individual objects in the measurement space are unknown, and even when the distances from the range imaging device are unknown, and even when the intensity of the ambient light is high, an integration time that can integrate charge required for measuring a measurement distance with predetermined accuracy can be determined, without saturating the charge storage units.

According to the present embodiment, an integration time that can integrate charge required for measuring a measurement distance with predetermined accuracy can be determined, without saturating the charge storage units. Thus, saturation of the charge storage units CS can be prevented, the SN ratio that is a ratio between signal (charges generated due to reflected light RL) and noise (charges generated due to ambient light) can be increased, and the accuracy for measuring a measurement distance can be improved.

According to the present embodiment, an emission cycle satisfying the eye-safety standards in terms of the integration time is extracted from the emission cycle table, being correlated with the corrected integration time calculated by the integration time correction section 434, light pulses are emitted according to an light pulse emission condition including the corrected integration time and the emission cycle, and charge generated in the photoelectric conversion element PD at each emission is distributed to the charge storage units and integrated therein. Thus, a satisfactory integration time can be obtained so that charge required for measuring the distance can be integrated in the charge storage units, the charge storage units will not be saturated, and exposure of the object can be reduced even when the light pulses are continuously emitted. Furthermore, exposure of the human body can be limited to be equal to or smaller than the maximum permissible exposure, and thus human safety standards (eye-safety standards) can be satisfied.

A range imaging device using TOF techniques has been described so far as configurations of the first and second embodiments; however, the present invention is not limited to be applied to this, but can be applied to sensors such as RGB-IR (red green blue - infrared radiation) sensors with a structure in which a photodiode is applied as a charge storage unit.

As long as charge generated due to incident light in the photodiode is configured to be integrated in the charge storage units, the present invention can also be applied to CCD (charge coupled device) image sensors, CMOS (complementary metal oxide semiconductor) image sensors, or the like.

The first and second embodiments set forth above each describe a configuration having four pixel signal readouts RU1 to RU4; however, the configuration is not limited to this. In the configuration including three pixel signal readouts RU, or including five or more pixel signal readouts RU, i.e., in the configuration including three or more pixel signal readouts RU, processing similar to the present embodiment may be performed by sequentially subtracting the first adjustment time from the integration time to calculate an integration time with which the integrated charge will not exceed the first threshold, and thus calculating an integration time according to the intensity of the reflected light RL from the object, unlike the case where the integration time is determined based on only the distance. Thus, not only the distance from the object but also the reflectance are taken into account. As a result, if there is an object with a high reflectance at a short distance, the distance between the range imaging device and the object can be measured correctly without saturating the charge storage units CS.

For the configuration including three or more pixel signal readouts RU, processing of the present embodiment may be performed by calculating a light intensity from the reflected light RL every time the light pulses PO are emitted, and if the light intensity of the reflected light RL exceeds the second threshold, by performing correction by subtracting the second adjustment time corresponding to the ambient light from the integration time calculated for the light intensity, because the integrated charge can saturate the charge storage units CS due to use of the new integration time, depending on the intensity of the ambient light and the intensity of the reflected light RL. Thus, a new integration time for final use can be calculated so that the charge storage units CS will not be saturated. Even when the reflectances of the individual objects in the measurement space are unknown, and even when the distances from the range imaging device are unknown, and even when the intensity of the ambient light is high, an integration time that can integrate charge required for measuring a measurement distance with predetermined accuracy can be obtained, without saturating the charge storage units.

The configuration described in the first and second embodiments includes four pixel signal readouts RU1 to RU4, and the pixel signal readout RU1 is dedicated to measurement of ambient light. For a configuration including three or more pixel signal readouts RU, none of the pixel signal readouts RU may be required to be dedicated to ambient light use, but a comparison may be made between the pixel signal readouts RU for the integrated charges. As a result, even in a configuration in which a pixel signal readout RU with smallest integrated charge is selected as a pixel signal readout RU for reading ambient light, an integration time with which the charge storage units CS are not saturated can be calculated by executing the processing similarly to the first and second embodiments.

As described above, even in a configuration including three or more pixel signal readouts RU, an integration time with which electrical charge required for measuring a distance with predetermined accuracy can be determined without saturating the charge storage units described in the embodiments, as long as the intensity of ambient light, a distance to the object, and total charge of reflected light excluding the ambient light can be acquired. Thus, the charge storage units CS can be prevented from being saturated, the SN ratio that is a ratio between signal (charges generated due to the reflected light RL) and noise (charges generated due to ambient light) can be increased, and the accuracy of measuring a measurement distance can be improved.

[Industrial Applicability]

As described above, according to the present invention, there can be provided a range imaging device and a range imaging method which can determine an integration time for integrating electrical charge required for performing distance measurement with predetermined accuracy, without saturating the charge storage units even when the reflectances of the objects in a measurement space or the distances to the objects from the range imaging device are unknown.

[Reference Signs List]

```
1 ... Range imaging device
2 ... Light source unit
3 ... Light-receiving unit
31 ... Lens
32 ... Range image sensor (range imaging device)
321 ... Pixel circuit
322 ... Pixel drive circuit
4 ... Range image processing unit
41 ... Timing control unit
42 ... Distance calculation unit
```

43 ... Measurement control unit
431 ... Integrated charge determination section
432 ... Light intensity calculation section
433 ... Integration time selection section
434 ... Integration time correction section
435 ... Threshold storage
436 ... Integration time table storage
437 ... Emission cycle changing section
438 ... Emission cycle table storage
CS1, CS2, CS3, CS4 ... Charge storage unit
FD1, FD2, FD3, FD4 ... Floating diffusion
G1, G2, G3, G4 ... Transfer transistor
GD ... Charge discharge transistor
PD ... Photoelectric conversion element
PO ... Light pulses
RL ... Reflected light
RT1, RT2, RT3, RT4 ... Reset transistor
S ... Object
SF1, SF2, SF3, SF4 ... Source follower transistor
SL1, SL2, SL3, SL4 ... Selection transistor

**Claims**

1. A range imaging device, comprising

   a light-receiving unit including

   at least one pixel circuit including a photoelectric conversion element that generates charge according to incident light incident from a measurement space that is a space targeted to measurement, N (N≥3) charge storage units that integrate the charge in a frame cycle, and transfer transistors that transfer the charge to the charge storage units from the photoelectric conversion element, and
   a pixel drive circuit that turns on or off the transfer transistors for the charge storage units at predetermined integration timing synchronizing with emission of light pulses to distribute and integrate the charge;

   a light source unit that emits the light pulses to the measurement space;
   a range image processing unit that calculates a distance to an object that is present in the measurement space as a measurement distance, based on charge integrated in each of the charge storage units; and
   a measurement control unit that calculates an integration time that is the number of times of integrating the charge in the charge storage units, according to integrated charge in the charge storage units, the distance, and intensity of the incident light, wherein
   when the integrated charge exceeds a preset first threshold, the measurement control unit sequentially decrements the integration time by a predetermined first unit until the charge becomes equal to or smaller than the first threshold.

2. The range imaging device according to claim 1, wherein
   after the integrated charge becomes equal to or smaller than the first threshold, the measurement control unit detects a pixel circuit including the charge storage units having greatest integrated charge, and calculates the integration time corresponding to the distance and the light intensity of the greatest integrated charge of the pixel circuit.

3. The range imaging device according to claim 2, wherein

   the device further comprises an integration time table in which combinations of the distance and the light intensity are correlated with the integration time;
   the light intensity is charge in one integration obtained by dividing the integrated charge by the integration time; and
   the measurement control unit selects and reads the integration time corresponding to the distance and the light intensity of the greatest integrated charge of the pixel circuit, from the integration time table.

**4.** The range imaging device according to claim 3, wherein
when the light intensity used when reading the integration time is equal to or greater than a preset second threshold, the measurement control unit decrements the integration time read from the integration time table by a predetermined second unit.

**5.** The range imaging device according to any one of claims 1 to 4, wherein
the first threshold is set to any value of 60% or more of the greatest integrated charge of the charge storage units.

**6.** The range imaging device according to any one of claims 1 to 5, wherein
after calculating the integration time corresponding to the distance and the light intensity, the measurement control unit continuously uses the integration time until the integrated charge exceeds the first threshold.

**7.** The range imaging device according to any one of claims 1 to 5, wherein
after calculating the integration time corresponding to the distance and the light intensity, the measurement control unit continuously uses the integration time until the number of times of measuring the distance exceeds a preset predetermined number of times.

**8.** The range imaging device according to any one of claims 1 to 5, wherein
after calculating the integration time corresponding to the distance and the light intensity, the measurement control unit changes the integration time every preset number of frame cycles, based on the distance, the light intensity, and charge generated due to ambient light.

**9.** The range imaging device according to any one of claims 1 to 8, wherein
an emission cycle of the light pulses is set to become longer as the integration time is increased.

**10.** The range imaging device according to any one of claims 1 to 9, wherein

the at least one pixel circuit is disposed in an array in the light-receiving unit; and
the measurement control unit compares the integrated charge of the charge storage units of each of the at least one pixel circuit in a preset predetermined region in an array of the at least one pixel circuit, with the first threshold.

**11.** The range imaging device according to any one of claims 1 to 10, wherein
the at least one pixel circuit includes a charge discharge circuit that discharges the charge generated in the photoelectric conversion element other than in a charge integration period of the charge storage units.

**12.** A range imaging method that controls a range imaging device including at least one pixel circuit, a light source unit, a pixel drive circuit, a range image processing unit, and a measurement control unit, the at least one pixel circuit including a photoelectric conversion element, a plurality of charge storage units, and transfer transistors, the method comprising steps of:

emitting light pulses in a measurement space that is a space targeted to measurement, as performed by the light source unit;
turning on or off the transfer transistors that transfer charge to N (N≥3) charge storage units from the photoelectric conversion element, the charge being generated by the photoelectric conversion element at predetermined timing synchronizing with emission of the light pulses, according to incident light incident from the measurement space, as performed by the pixel drive circuit;
calculating a distance to an object present in the measurement space as a measurement distance, based on charge integrated in each of the charge storage units, as performed by the range image processing unit; and
sequentially decrementing an integration time by a predetermined first unit until integrated charge in the charge storage units becomes equal to or smaller than a predetermine first threshold, when the integrated charge exceeds the first threshold when calculating the integration time according to the integrated charge, the distance, and light intensity of the incident light, the integration time being the number of times of integrating the charges in the charge storage units, as performed by the measurement control unit.

# FIG.1

RANGE IMAGING DEVICE 1

LIGHT SOURCE UNIT 2

DIFFUSER PLATE

LIGHT SOURCE DEVICE 21

22

S

P0

RL

LIGHT-RECEIVING UNIT 32

LENS

PIXEL CIRCUIT 321

PIXEL DRIVE CIRCUIT 322

RANGE IMAGE SENSOR

31

3

RANGE IMAGE PROCESSING UNIT 4

TIMING CONTROL UNIT 41

DISTANCE CALCULATION UNIT 42

MEASUREMENT CONTROL UNIT

43 (43A)

EP 4 283 981 A1

# FIG.2

FIG.3

# FIG.4

43

| 431 INTEGRATED CHARGE DETERMINATION SECTION | 434 INTEGRATION COUNT CORRECTION SECTION |
| 432 LIGHT INTENSITY CALCULATION SECTION | 435 THRESHOLD STORAGE |
| 433 INTEGRATION COUNT SELECTION SECTION | 436 INTEGRATION COUNT TABLE STORAGE |

# FIG.5A

321

A

B

FIG.5B

321
D
C

FIG.5C

321MX
E
321

FIG.6

| DISTANCE ⟍ LIGHT INTENSITY | ***** | ***** | - - - - - |
|---|---|---|---|
| ***** | ***** | ***** | - - - - - |
| ***** | ***** | ***** | - - - - - |
| ***** | ***** | ***** | - - - - - |
| ***** | ***** | ***** | - - - - - |
| ***** | ***** | ***** | - - - - - |

EP 4 283 981 A1

# FIG.7

```
                           START
                             │
                             ▼
                  ┌──────────────────────┐  ──S101
                  │  RANGING PROCESSING  │
                  └──────────────────────┘
                             │◄─────────────────────┐
                             ▼                       │
                  ┌──────────────────────┐  ──S102   │
                  │ ACQUIRE INTEGRATED   │           │
                  │       CHARGE         │           │
                  └──────────────────────┘           │
                             │                        │
        ┌────────────────────┼                        │
        │                    ▼                        │
┌────────────────┐  ──S104                            │
│ ADJUST         │                                    │
│ INTEGRATION    │          ◄╲ S103                   │
│ COUNT          │      YES ╱   ╲                     │
└────────────────┘◄────────╲ FIRST THRESHOLD ╱        │
        ▲                    ╲ EXCEEDED? ╱            │
        └─────────────────────╲   ╱                   │
                                 │ NO                 │
                                 ▼                    │
                  ┌──────────────────────┐  ──S105    │
                  │ CALCULATE LIGHT      │            │
                  │     INTENSITY        │            │
                  └──────────────────────┘            │
                             │                         │
                             ▼                         │
                  ┌──────────────────────┐  ──S106     │
                  │ SELECT INTEGRATION   │            │
                  │       COUNT          │            │
                  └──────────────────────┘            │
                             │                         │
                             ▼                         │
              YES   ╱╲ S107                            │
           ┌───────╲  SECOND THRESHOLD ╱              │
           │        ╲   EXCEEDED?    ╱                │
           │          ╲     ╱                         │
           ▼            │ NO                          │
┌────────────────┐ ──S108                            │
│ ADJUST         │                                   │
│ INTEGRATION    │                                   │
│ COUNT          │                                   │
└────────────────┘                                   │
           │                  │                       │
           └──────────────────┤                       │
                              ▼                        │
                  ┌──────────────────────┐  ──S109     │
                  │  RANGING PROCESSING  │            │
                  └──────────────────────┘            │
                             │                         │
                             ▼                         │
                      ╱╲ S110                          │
                  ╱  SPECIFIED TIMES ╱  YES            │
                  ╲   OR MORE?     ╱──────────────────┘
                    ╲     ╱
                      │ NO
                      └────────────┘
```

25

# FIG.8

43A

| | |
|---|---|
| **431**<br>INTEGRATED CHARGE DETERMINATION SECTION | **437**<br>EMISSION CYCLE CHANGING SECTION |
| **432**<br>LIGHT INTENSITY CALCULATION SECTION | **435**<br>THRESHOLD STORAGE |
| **433**<br>INTEGRATION COUNT SELECTION SECTION | **436**<br>INTEGRATION COUNT TABLE STORAGE |
| **434**<br>INTEGRATION COUNT CORRECTION SECTION | **438**<br>EMISSION CYCLE TABLE STORAGE |

FIG.9

# FIG.10

START

RANGING PROCESSING — S101

ACQUIRE INTEGRATED CHARGE — S102

FIRST THRESHOLD EXCEEDED? — S103

YES → ADJUST INTEGRATION COUNT — S104

NO

CALCULATE LIGHT INTENSITY — S105

SELECT INTEGRATION COUNT — S106

SECOND THRESHOLD EXCEEDED? — S107

YES → ADJUST INTEGRATION COUNT — S108

NO

ADJUST EMISSION CYCLE — S109A

RANGING PROCESSING — S109B

SPECIFIED TIMES OR MORE? — S110

YES

NO

## INTERNATIONAL SEARCH REPORT

| International application No. |
| --- |
| **PCT/JP2022/002154** |

**A. CLASSIFICATION OF SUBJECT MATTER**

*H04N 5/374*(2011.01)i; *G01S 7/4861*(2020.01)i; *G01S 17/10*(2020.01)i; *G01S 17/894*(2020.01)i
FI:  G01S17/894; H04N5/374; G01S17/10; G01S7/4861

According to International Patent Classification (IPC) or to both national classification and IPC

**B. FIELDS SEARCHED**

Minimum documentation searched (classification system followed by classification symbols)

G01C3/00-3/32; G01S7/48-7/51,17/00-17/95; H04N5/30-5/378

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2016/208214 A1 (MURATA MANUFACTURING CO) 29 December 2016 (2016-12-29) paragraphs [0012]-[0156], fig. 1-20 | 1-3, 5-8, 10-12 |
| A | paragraphs [0012]-[0156], fig. 1-20 | 4, 9 |
| Y | JP 2010-164463 A (MITSUBISHI ELECTRIC CORP) 29 July 2010 (2010-07-29) paragraphs [0006], [0049]-[0052] | 1-3, 5-8, 10-12 |
| A | paragraphs [0006], [0049]-[0052] | 4, 9 |
| A | WO 2020/178920 A1 (BROOKMAN TECH INC) 10 September 2020 (2020-09-10) entire text, all drawings | 1-12 |
| A | JP 5-66116 A (SUMITOMO ELECTRIC IND LTD) 19 March 1993 (1993-03-19) entire text, all drawings | 1-12 |
| A | JP 2008-209162 A (MATSUSHITA ELECTRIC WORKS LTD) 11 September 2008 (2008-09-11) entire text, all drawings | 1-12 |

☑ Further documents are listed in the continuation of Box C.  ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**08 February 2022** | Date of mailing of the international search report<br><br>**08 March 2022** |
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

**INTERNATIONAL SEARCH REPORT**

| International application No. |
|---|
| **PCT/JP2022/002154** |

| C. | DOCUMENTS CONSIDERED TO BE RELEVANT | |
|---|---|---|
| Category* | Citation of document, with indication, where appropriate, of the relevant passages | Relevant to claim No. |
| A | US 2007/0257184 A1 (OLSEN, Richard Ian) 08 November 2007 (2007-11-08)<br>entire text, all drawings | 1-12 |

Form PCT/ISA/210 (second sheet) (January 2015)

**INTERNATIONAL SEARCH REPORT**
Information on patent family members

International application No.

**PCT/JP2022/002154**

| Patent document cited in search report | | | Publication date (day/month/year) | Patent family member(s) | | | Publication date (day/month/year) |
|---|---|---|---|---|---|---|---|
| WO | 2016/208214 | A1 | 29 December 2016 | US 2018/0045513 A1 paragraphs [0032]-[0180], fig. 1-20 CN 107533136 A JP 6406449 B2 | | | |
| JP | 2010-164463 | A | 29 July 2010 | (Family: none) | | | |
| WO | 2020/178920 | A1 | 10 September 2020 | US 2021/368123 A1 entire text, all drawings CN 113544544 A JP 6825164 B1 | | | |
| JP | 5-66116 | A | 19 March 1993 | (Family: none) | | | |
| JP | 2008-209162 | A | 11 September 2008 | (Family: none) | | | |
| US | 2007/0257184 | A1 | 08 November 2007 | WO 2007/005714 A2 entire text, all drawings CN 101427372 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021008797 A
- JP 2004294420 A

- JP 2012185171 A